(19) Europäisches Patentamt / European Patent Office / Office européen des brevets

(11) **EP 4 101 311 A1**

(12) **EUROPEAN PATENT APPLICATION**
published in accordance with Art. 153(4) EPC

(43) Date of publication:
**14.12.2022 Bulletin 2022/50**

(21) Application number: **20917731.0**

(22) Date of filing: **06.02.2020**

(51) International Patent Classification (IPC):
**A23L 2/00** (2006.01)        **A23L 2/52** (2006.01)
**C12G 3/06** (2006.01)

(52) Cooperative Patent Classification (CPC):
**A23L 2/00;** A23L 2/52; C12G 3/06

(86) International application number:
**PCT/JP2020/004635**

(87) International publication number:
**WO 2021/157030 (12.08.2021 Gazette 2021/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Suntory Holdings Limited
Osaka 530-8203 (JP)**

(72) Inventor: **KATO, Yuichi
Fuchu-shi, Tokyo 183-8533 (JP)**

(74) Representative: **Vossius & Partner
Patentanwälte Rechtsanwälte mbB
Siebertstraße 3
81675 München (DE)**

(54) **BEER-FLAVORED BEVERAGE**

(57)     A beer-taste beverage, containing maltol at 0.05 to 8.00 mg/L, furaneol at 0.005 to 3.00 mg/L, and β-damascenone at 0.005 to 0.80 mg/L, wherein the beverage has a calorie of lower than 5 kcal per 360 mL and an ethanol content of less than 0.5 (v/v)%.

**Description**

Technical Field

The present invention relates to a beer-taste beverage.

Background of Art

With an increase in health consciousness in recent years, there is a growing demand for low-calorie, low-fat, and low-protein beverages with extremely low ethanol concentration or without alcohol, as a beer-taste beverage that is a carbonated beverage with a taste of beer. However, the low-calorie, low-fat, and low-protein beverages restrict amounts of raw materials used, resulting in poor flavor and poor taste of beer-taste beverages (Japanese Patent Laid-Open No. 2014-207914 (Patent Literature 1)).

Citation List

Patent Literature

Patent Literature 1: Japanese Patent Laid-Open No. 2014-207914

Summary of Invention

Technical Problem

Under these circumstances, beer-taste beverages with superior taste have been demanded.

Solution to Problem

The present invention provides a beer-taste beverage comprising predetermined amounts of maltol, furaneol, and β-damascenone, and having a low calorie and an ethanol content of less than 0.5 (v/v)%. Namely, the present invention includes the following aspects of invention.

[1] A beer-taste beverage, comprising maltol at 0.05 to 8.00 mg/L, furaneol at 0.005 to 3.00 mg/L, and β-damascenone at 0.005 to 0.80 mg/L, wherein the beverage has a calorie of lower than 5 kcal per 360 mL and an ethanol content of less than 0.5 (v/v)%.
[2] The beer-taste beverage according to [1], comprising no artificial flavor.
[3] The beer-taste beverage according to [1] or [2], comprising no artificial sweetener.
[4] The beer-taste beverage according to [3], comprising no sweetener.
[5] The beer-taste beverage according to any one of [1] to [4], having a fat content of less than 0.5 g per 350 mL.
[6] The beer-taste beverage according to any one of [1] to [5], having a protein content of less than 0.5 g per 350 mL.
[7] The beer-taste beverage according to any one of [1] to [6], wherein a carbon dioxide gas pressure of the beer-taste beverage is 0.700 w/w% or less.
[8] The beer-taste beverage according to any one of [1] to [7], wherein the beer-taste beverage is a non-fermented beverage.

Advantageous Effects of Invention

The beer-taste beverage according to one preferred embodiment of the present invention has a beer taste with a favorable taste.

Description of Embodiments

1. Beer-taste beverage

As used herein, the "beer-taste beverage" refers to a carbonated beverage having a beer-like taste. The beer-taste beverage refers to an effervescent beverage having a flavor, taste, and texture equivalent or similar to beer, with high thirst-quenching feeling and drinkability, regardless of alcohol content or use of malt. Namely, the beer-taste beverages may be alcoholic beverages or so-called non-alcoholic or low-alcoholic beverages with alcohol content of less than 1% by volume. Moreover, they may also be beverages using malt as a raw material or those without using malt as a raw material. Furthermore, they may be fermented or non-fermented beverages. Specific examples of the beer-taste beverages include beer, low-malt beer using malt as a raw material, sparkling alcoholic beverages without using malt, low-alcohol sparkling beverages, and non-alcoholic beer, etc. Other examples may be liqueurs obtained by mixing beverages using malt as a raw material and produced through a fermentation process, with alcohol-containing distillates. The alcohol-containing distillate is a solution containing an alcohol obtained through a distillation operation, and those generally classified as distilled alcoholic beverages such as spirits, can be used.

The ethanol content of the beer-taste beverage of the present invention is less than 0.5 (v/v)%, preferably less than 0.1 (v/v)%, more preferably less than 0.01 (v/v)%, still more preferably less than 0.005 (v/v)%, and particularly preferably less than 0.004 (v/v)%.

As used herein, the ethanol content is defined and denoted as a percentage based on volume/volume (v/v%). Moreover, the ethanol content of the beverage can be measured by any known method, for example, by gas chromatography.

A beer-taste beverage according to one embodiment of the present invention may be a fermented beverage obtained by being undergone a fermentation step using yeast in a production step and then removing ethanol produced in the fermentation step to adjust an ethanol content to the above range, or it may be a non-fermented beverage prepared without being undergone such a fermentation step.

From the viewpoint of facilitating adjustment of the ethanol content to the above range, the beer-taste beverage according to one embodiment of the present invention is preferably produced without being undergone a fermentation step.

General beer-taste beverages are likely to have insufficient taste due to their low ethanol content. In order to address such a problem, the present inventors have found that a beverage containing predetermined amounts of maltol, furaneol, and β-damascenone can provide the beer taste with a favorable taste while minimizing an inappropriate and unpleasant sweetness, compared to conventional beer-taste beverages that use sweeteners, and have thus completed the present invention based on the finding.

The content of maltol in the beer-taste beverage according to one embodiment of the present invention is, from the viewpoint of providing a beer-taste beverage with a taste more typical of beer, 0.05% mg/L or more, preferably 0.07 mg/L or more, more preferably 0.08 mg/L or more, more preferably, 0.09 mg/L or more, more preferably 0.10 mg/L or more, still more preferably 0.25 mg/L or more, still more preferably 0.50 mg/L or more, and particularly preferably 1.00 mg/L or more, based on a total volume of the aforementioned beer-taste beverage. Moreover, from the viewpoint of inhibiting the inappropriate and unpleasant sweetness, the content of maltol is 8.00 mg/L or less, preferably 7.00 mg/L or less, more preferably 6.00 mg/L or less, more preferably 5.00 mg/L or less, more preferably 4.00 mg/L or less, more preferably 3.00 mg/L or less, still more preferably 2.00 mg/L or less, and particularly preferably 1.70 mg/L or less, based on the total volume of the aforementioned beer-taste beverage.

The content of furaneol in the beer-taste beverage according to one embodiment of the present invention is, from the viewpoint of providing a beer-taste beverage with a taste more typical of beer, 0.005 mg/L or more, preferably 0.007 mg/L or more, more preferably 0.009 mg/L or more, more preferably 0.010 mg/L or more, more preferably 0.020 mg/L or more, more preferably 0.030 mg/L or more, more preferably 0.040 mg/L or more, still more preferably 0.050 mg/L or more, and particularly preferably 0.060 mg/L or more, based on the total volume of the aforementioned beer-taste beverage. Moreover, from the viewpoint of inhibiting the inappropriate and unpleasant sweetness, the content of furaneol is 3.00 mg/L or less, preferably 2.70 mg/L or less, more preferably 2.40 mg/L or less, more preferably 2.00 mg/L or less, more preferably 1.50 mg/L Less, more preferably 1.20 mg/L or less, still more preferably 0.90 mg/L or less, and particularly preferably 0.80 mg/L or less, based on the total volume of the aforementioned beer-taste beverage.

The content of β-damascenone in the beer-taste beverage according to one embodiment of the present invention is, from the viewpoint of providing a beer-taste beverage with a taste more typical of beer, 0.005 mg/L or more, preferably 0.007 mg/L or more, more preferably 0.008 mg/L or more, more preferably 0.009 mg/L or more, preferably 0.01 mg/L or more, more preferably 0.05 mg/L or more, still more preferably 0.10 mg/L or more, still more preferably 0.12 mg/L or more, still more preferably 0.14 mg/L or more, and particularly preferably 0.16 mg/L or more, based on the total volume of the aforementioned beer-taste beverage. Moreover, from the viewpoint of inhibiting the inappropriate and unpleasant sweetness, the content of β-damascenone is 0.80 mg/L or less, preferably 0.70 mg/L or less, more preferably 0.60 mg/L or less, more preferably 0.50 mg/L or less, more preferably 0.40 mg/L Less, more preferably 0.30 mg/L or less, still more preferably 0.20 mg/L or less, and particularly preferably 0.18 mg/L or less, based on the total volume of the aforementioned beer-taste beverage.

The maltol, furaneol and β-damascenone in the beer-taste beverage according to one embodiment of the present invention may be artificially synthesized compounds (for example, artificial flavors) or naturally derived compounds (for example, natural flavors), however, the natural flavor is preferably used. The natural flavor falls under the category of "natural flavor" as defined in Title 21 CFR Section 101.22 of US FDA. As used herein, "natural maltol" is naturally derived maltol, "natural furaneol" is naturally derived furaneol, and "natural β-damascenone" is naturally derived β-damascenone. As used herein, "naturally derived" means that the natural raw material is an origin raw material. Naturally derived components are, for example, those obtained from vegetable raw materials, animal raw materials, microbial raw materials, fermented foods, etc. When producing naturally derived components, they may undergo physical or chemical conversion, a production process using microorganisms or enzymes, a chemical conversion process using inorganic catalysts, or the like.

Further, natural maltol, natural furaneol, and natural β-damascenone each falls under the category of "natural flavor" as defined in Title 21 CFR Section 101.22 of US FDA. Therefore, based on Title 21 CFR Section 101.22 of US FDA, the maltol, furaneol, and β-damascenone that are the "natural flavors" correspond to "natural maltol," "natural furaneol," and "natural β-damascenone" as used herein, respectively.

In the present description, the contents of maltol, furaneol and β-damascenone can be determined by liquid chromatography mass spectrometry (LC/MS). The quantitative values are calculated by a method using a calibration curve calculated at known concentrations. The LC/MS measurement conditions are as follows.

(1) LC/MS measurement conditions for maltol and furaneol

(LC separation conditions)

HPLC system: Prominence UFLC (manufactured by Shimadzu Corporation)
Column: L-column2 ODS (2.1 mm × 150 mm, 5.0 μm)
Column temperature: 40°C
Mobile phase A :0.1% formic acid aqueous solution
Mobile phase B :acetonitrile

$$A{:}B = 85{:}15 \ (0 \ \text{min}) \rightarrow 60{:}40 \ (10 \ \text{min})$$

Flow rate: 0.2 mL/min
Injection volume: 5 μL

(Mass spectrometry conditions)

Mass spectrometer: 4500 Qtrap (manufactured by AB SCIEX Pte. Ltd.)
Ionization method: ESI
Quantitative ion: Maltol Q1/Q3 = 127.0/43.0

$$\text{Furaneol Q1/Q3} = 129.0/57.0$$

(2) LC/MS measurement conditions for β-damascenone

(LC separation conditions)

Apparatus: 1290 Infinity (manufactured by Agilent Technologies Inc)
Column: ZORBAX Eclipse Plus C18 (2.1 mm × 100 mm, 1.8 μm)
Column temperature: 40°C
Mobile phase A: 0.1% formic acid + 10 mM ammonium formate aqueous solution
Mobile phase B: acetonitrile

$$A{:}B = 90{:}10 \ (0 \ \text{min}) \rightarrow 0{:}100 \ (10 \ \text{min})$$

Flow rate: 0.2 mL/min

Injection volume: 5 μL

(Mass spectrometry conditions)

Mass spectrometer: 6460 Triple Quadrupole LC/MS (manufactured by Agilent Technologies Inc.)
Ionization method: ESI
Quantitative ion: β-damascenone Q1/Q3 = 191.1/69.1

In the beer-taste beverage according to one embodiment of the present invention, the ratio of content of maltol (unit: mg/L) and content of furaneol (unit: mg/L) [maltol/furaneol] is preferably 0.03 or more, more preferably 0.05 or more, still more preferably 0.10 or more, even still more preferably 0.50 or more, and particularly preferably 1.20 or more, and preferably 1,000 or less, more preferably 800 or less, still more preferably 600 or less, even still more preferably 300 or less, even still more preferably 200 or less, even still more preferably 100 or less, even still more preferably 50 or less, even still more preferably 10 or less, and particularly preferably 5 or less.

In the beer-taste beverage according to one embodiment of the present invention, the ratio of content of maltol (unit: mg/L) and content of β-damascenone (unit: mg/L) [maltol/β-damascenone] is preferably 0.10 or more, more preferably 0.15 or more, still more preferably 0.20 or more, even still more preferably 1.50 or more, and particularly preferably 3.00 or more, and preferably 1,000 or less, more preferably 800 or less, still more preferably 600 or less, even still more preferably 300 or less, and particularly preferably 200 or less.

In the beer-taste beverage according to one embodiment of the present invention, the ratio of content of furaneol (unit: mg/L) and content of β-damascenone (unit: mg/L) [furaneol/β-damascenone] is preferably 0.02 or more, more preferably 0.05 or more, still more preferably 0.07 or more, even still more preferably 1.00 or more, and particularly preferably 2.00 or more, and preferably 500 or less, more preferably 300 or less, still more preferably 200 or less, even still more preferably 150 or less, and particularly preferably 100 or less.

The calorie of the beer-taste beverage according to one embodiment of the present invention is less than 5 kcal per 360 mL. Such a beverage with low calorie can provide a beverage prone to be accepted to health-conscious consumers. The calorie can be controlled by adjusting a composition and amounts of raw materials (for example, malt, grain such as wheat, hop, etc.).

It is noted that the calorie of beer-taste beverage can be calculated and obtained by multiplying an amount of each nutrient component quantified with an energy conversion factor of each component (protein: 4 kcal/g, fat: 9 kcal/g, carbohydrate: 4 kcal/g, dietary fiber: 2 kcal/g, alcohol: 7 kcal/g, organic acid: 3 kcal/g) and summing up each product obtained.

The pH of the beer-taste beverage according to one embodiment of the present invention is not particularly limited, but is preferably lower than 4.0, and from the viewpoint of controlling generation of microorganisms and improving the flavor of the beverage, the pH is preferably, 2.0 or higher.

The total amount of extract of the beer-taste beverage according to one embodiment of the present invention is not particularly limited, and from the viewpoint of rendering the beverage lightly smooth, it is preferably 1.5% by weight or less, more preferably 1.1% by weight or less, still more preferably 0.8% by weight or less, and even still more preferably less than 0.50% by weight.

As used herein, "total amount of extract" refers to an extract value (% by mass) of a degassed, sample, measured according to the "Beer Analysis Method 7.2 Extract" specified by Brewery Convention of Japan (BOCJ).

The color of the beer-taste beverage according to one embodiment of the present invention is not particularly limited, and may be an amber or golden color like regular beer, a black color like black beer, or clear and colorless, or a colorant may be added to color it a desired color. The color of the beverage can be distinguished by the naked eye, but may also be determined by a total light transmission, chromaticity, etc.

As used herein, the chromaticity can be measured by the method specified by the European Brewery Convention (EBC).

The chromaticity of the beer-taste beverage according to one embodiment of the present invention is not particularly limited, and is preferably 0.5 EBC or higher, more preferably 1 EBC or higher, still more preferably 2 EBC or higher, still more preferably 3 EBC or higher, still more preferably 4 EBC or higher, and particular preferably 5 EBC or higher. In addition, the chromaticity of a beer-taste beverage according to one embodiment of the present invention is preferably 100 EBC or less, more preferably 75 EBC or less, still more preferably 50 EBC or less, still more preferably 25 EBC or less, still more preferably 20 EBC or less, and particularly preferably 15 EBC or less.

The beer-taste beverage according to one embodiment of the present invention may be in the form in which the beverage is packed in a container, and examples of the container include bottles, PET bottles, cans, or kegs, and from the viewpoint of transport facilitation, cans, bottles, or PET bottles are preferred.

1.1 Raw materials

As the main raw materials of the beer-taste beverage according to one embodiment of the present invention, malt may be used together with water, or malt may not be used. Moreover, a hop may be used, and in addition thereto, a sweetener, water-soluble dietary fibers, a bittering agent or bitterness-imparting agent, an antioxidant, a flavor, an acidulant, a vitamin, a mineral, a preservative, etc., may be used.

When using malts as raw material, the malts refer to those obtained by germinating seeds of wheat-family grains such as barley, wheat, rye, Avena fatua, oats, adlay, and Avena sativa, subjecting the germinated seeds to drying, and removing the roots, and they may be from any production area and of any cultivar.

In one embodiment of the present invention, barley malt is preferably used. The barley malt is one of the malts most commonly used as raw materials of beer-taste beverages in Japan. There are various types of barleys such as two-row barley and six-row barley, but any of them may be used. Further, in addition to usual malts, colored malts, etc. can also be used. When the colored malts are used, different types of colored malts may be appropriately combined for use, or one type of colored malt may be used.

Moreover, grains other than malts may be used together with malt.

Examples of such grains include wheat-family grains other than malts (barley, wheat, rye, Avena fatua, oats, adlay, Avena sativa, etc.), rice (polished rice, brown rice, etc.), corn, kaoliang, potato, bean (soybean, pea, etc.), buckwheat, sorghum, foxtail millet, barnyard millet, and starch obtained therefrom and extracts thereof (extracts), etc.

When malt is not used, a beer-taste beverage using liquid sugar containing a carbon source and a nitrogen source as an amino acid-containing material, such as the aforementioned grains other than malt, is included.

Examples of the hops used according to one embodiment of the present invention include those in the form of pellet hop, powdered hop, and hop extract. Moreover, as the hops to be used, a processed hop product such as isomerized hop or reduced hop may be used.

The amount of hop added is appropriately adjusted, but is preferably 0.0001 to 1% by mass with respect to the total amount of the beverage.

A beverage according to one embodiment of the present invention contains maltol, furaneol and β-damascenone that are flavors. As used herein, the "flavor" is generally used to supplement aroma and flavor that are lost during a production or storage of food and drink, or to impart new flavor to the food and drink. For example, a compound that is required to be labeled as "flavor" on a label for beverage raw materials, is the "flavor" as used herein.

In the beverage according to one embodiment of the present invention, maltol, furaneol, and β-damascenone, can be produced by a method for adding these compounds or a mixture containing these, a method for adjusting amounts produced from the raw materials, or a method for combining these methods for use.

Further, in the beverage according to one embodiment of the present invention, natural maltol, natural furaneol, and natural β-damascenone each can be produced by an aminocarbonyl reaction by boiling a mixture of raw materials containing a saccharide and an amino acid contained in natural raw materials. Therefore, controlling a reaction time and reaction rate of the aminocarbonyl reaction by adjusting contents of the saccharide and amino acid in the mixture of the raw materials and the boiling time as well as boiling temperature of the mixture of raw materials, etc. can adjust production amounts of the natural maltol, natural furaneol, and natural β-damascenone.

Moreover, by adding a composition (such as an essential oil) and compounds containing one or more of natural maltol, natural furaneol, and natural β-damascenone, which are derived from natural raw materials as origin raw materials, to a raw beverage, the content of each component can also be adjusted.

In the beverages according to one embodiment of the present invention, a flavor other than maltol, furaneol and β-damascenone may be further used. The flavor that can be used in the beverage according to one embodiment of the present invention include esters, higher alcohols and the like, specifically ethyl acetate, isoamyl acetate, n-propanol, isobutanol, and acetaldehyde.

Further, from consumers' increasing awareness of the natural orientation, the beverage according to one embodiment of the present invention does not preferably contain "artificial flavor" obtained by chemically synthesizing a compound effective as the flavor or a composition containing such a compound. The term "artificial flavor" refers to a flavor that is not a natural flavor. The "artificial flavor" falls in the category of the "artificial flavor" as defined in Title 21 CFR Section 101.22 of US FDA.

The term "beverage containing no artificial flavor" is a provision that excludes beverages containing artificial flavors with a special intent, and does not exclude beverages inevitably containing artificial flavors.

However, even the beverages inevitably containing artificial flavors preferably have as low contents of the artificial flavors as possible. A specific amount of artificial flavor is preferably 0 to 10 parts by mass, more preferably 0 to 1 part by mass, still more preferably 0 to 0.1 part by mass, even still more preferably 0 to 0.01 parts by mass, and particularly preferably 0 parts by mass (not detected), relative to 100 parts by weight of the total of maltol, furaneol and β-damascenone contained in the beverage.

In the present description, "sweetener" refers to a raw material that imparts sweetness to beverages. In general, the sweetener that can be used in beer-taste beverages can be divided into a natural sweetener and an artificial sweetener. The natural sweetener includes commercially available saccharification liquids obtained by decomposing and refining starch derived from grains by acid or an enzyme, etc., saccharides such as commercially available starch syrup, saccharides of trisaccharides or higher, sugar alcohols, stevia, etc.

These saccharides may be in any form, for example, liquids such as a solution or solids such as a powder. Moreover, there is no specific limitation also on the types of raw material grain of starch, the method for refining starch, and the conditions of treatment such as hydrolysis with an enzyme or acid. For example, saccharides that are increased in the ratio of maltose by appropriately setting the conditions for hydrolysis with an enzyme or acid, may be used. In addition thereto, sucrose, fructose, glucose, maltose, trehalose, maltotriose, and solutions thereof (saccharide solutions), etc. can also be used.

Moreover, examples of the artificial sweeteners include aspartame, acesulfame potassium, neohesperidin DC, neotame, saccharin, sucralose, alitame, thaumatin, cyclamate, glycyrrhizin, etc.

Further, since the "sweetener" is a raw material that imparts sweetness to beverages, saccharides and the like derived from raw materials do not correspond to the "sweeteners" as used herein. Therefore, for example, in the beer-taste beverages, saccharides such as a monosaccharide, disaccharide, and trisaccharide or higher, derived from raw materials such as malt, caramel pigment, etc., and sugars such as starch and sugar alcohols derived from raw materials, and the like, are not included in the "sweeteners" as used herein.

In order not to impart an unnatural flavor, the beverage according to one embodiment of the present invention does not preferably contain an artificial sweetener.

It is noted that the term "beverage containing no artificial sweetener" is a provision that excludes beverages that contain artificial sweeteners with a specific intention, and does not exclude beverages that inevitably contain artificial sweeteners.

However, even the beverages that inevitably contain artificial sweeteners preferably have as low contents of artificial sweeteners as possible. A specific amount of artificial sweetener is preferably 0 to 10 parts by mass, more preferably 0 to 1 part by mass, still more preferably 0 to 0.1 parts by mass, even still more preferably 0 to 0.01 parts by mass, and particularly preferably 0 parts by mass (not detected), relative to 100 parts by mass of a total of maltol, furaneol, and β-damascenone contained in the beverage.

Furthermore, the beverage according to one embodiment of the present invention do not preferably contain sweeteners.

The term "beverage containing no sweetener" is a provision that excludes beverages that contain sweeteners with a specific intention, and does not exclude beverages that inevitably contain sweeteners.

However, even the beverages that inevitably contain sweeteners preferably have as low contents of the sweeteners as possible. A specific content of the sweetener is preferably 0 to 10 parts by mass, more preferably 0 to 1 part by mass, still more preferably 0 to 0.1 part by mass, even still more preferably 0 to 0.01 parts by mass, and particularly preferably 0 parts by mass (not detected), relative to 100 parts by mass of the total of maltol, furaneol, and β-damascenone contained in the beverage.

A content of fat in the beer-taste beverage according to one embodiment of the present invention is preferably less than 0.5 g per 350 mL. Most of fats contained in the beer-taste beverage are derived from malt that is the main raw material, and are present in various forms of neutral fats such as fatty acid and triglycerides, complex fats such as glycolipid and phospholipid, and fats bonding with starch grains, in a beer production step and in a beer-taste beverage production step. Methods for reducing contents of these fats include (1) removal of a germ that contains more fat than a raw material grain (refining), (2) removal by ethanol extraction from a raw material grain, (3) pretreatment of the raw material grain with lipolytic enzymes (Japanese Patent Application No. 48-22478, Japanese Patent Laid-Open No. 62-55069) or addition of lipolytic enzymes during a production step (Japanese Patent Publication No. 59-21594), (4) removal by separation and filtration, (5) use of malt as a raw material of beer that was subjected to removal treatment of fat (Japanese Patent Laid-Open No. 5-137555), (6) reduction or the like of the raw material grain containing fat, etc.

Moreover, a method for measuring a content of fat can be carried out according to a method by MacMurray and Morrison et al. (MacMurray and Morrison, Journal of the Science of Food and Agriculture, vol. 21, p. 520 (1970)).

A protein content of the beer-taste beverage according to one embodiment of the present invention is less than 0.5 g per 350 mL. The protein content can be measured by a quantification method of total nitrogen (protein) according to the modified Dumas method.

The content of protein can be adjusted by amounts used of protein-containing raw materials in the raw materials (wheat-family grains such as barley, wheat, rye, Avena fatua, oats, adlay, Avena sativa, etc., malts thereof, wheat proteins, soy proteins, pea proteins, and degradation products thereof, etc.), and fermentation conditions (in the case of including a fermentation step). In addition, proteins used separately as raw materials may be contained.

Examples of the water-soluble dietary fiber include indigestible dextrin, polydextrose, a guar gum decomposition product, pectin, glucomannan, alginic acid, laminarin, fucoidin, and carrageenan, and from the viewpoint of versatility such as stability and safety, indigestible dextrin or polydextrose is preferred.

In the beer-taste beverage according to one embodiment of the present invention, bitterness is preferably imparted by a hop or the like, and bittering agents or bitterness-imparting agents may be used together with the hop or instead of the hop.

The bittering agent or bitterness-imparting agent is not particularly limited, and those used as bitterness-imparting agents in ordinary beer or low-malt beer, such as Artemisia absinthium, naringin, rosemary, Ganoderma lucidum, caraway, Juniper rigida, sage, rosemary, Ganoderma lucidum, laurel, quassin, a citrus extract, a Picrasma quassioides wood extract, a coffee extract, a tea extract, a bitter melon extract, a lotus embryo extract, an Aloe arborescens extract, a rosemary extract, a Ganoderma lucidum extract, a laurel extract, a sage extract, a caraway extract, a spice extract, etc., can be used.

Bitterness units of the beer-taste beverage according to one embodiment of the present invention are preferably 5 BUs or more, more preferably 7 BUs or more, more preferably 10 BUs or more, and particularly preferably 12.5 BUs or more. Moreover, the bitterness units of the beer-taste beverage according to one embodiment of the present invention are preferably 50 Bus or less, more preferably 45 BUs or less, more preferably 40 BUs or less, more preferably 35 BUs or less, and particularly preferably 32 BUs or less.

The "bitterness units" are an index of bitterness brought about by iso-$\alpha$ acid such as isohumulone. The bitterness units are calculated according to an Analytica-ECB standard method of ECB. For example, to a degassed sample was added acid, the mixture was then extracted with isooctane, and an absorbance of the resulting isooctane layer is measured at 275 nm by using isooctane as a control and multiplied by the factor to enable bitterness units (BU) to be obtained.

The antioxidant is not particularly limited, and those used as antioxidants in ordinary beer and low-malt beer can be used, and examples of the antioxidant include ascorbic acid, erythorbic acid, catechin, etc.

The acidulant is not particularly limited provided that it is a substance having acidity, and examples include lactic acid, phosphoric acid, citric acid, gluconic acid, malic acid, phytic acid, acetic acid, succinic acid, glucono delta lactone, and salts thereof.

Among these acidulants other than tartaric acid, at least one selected from lactic acid, phosphoric acid, citric acid, gluconic acid, malic acid, phytic acid, acetic acid, succinic acid and salts thereof is preferred, at least one selected from lactic acid, phosphoric acid, citric acid, tartaric acid, acetic acid and salts thereof is more preferred, and at least one selected from phosphoric acid and lactic acid is still more preferred.

These acidulants may be used alone or in combinations of two or more.

1.2 Carbon dioxide gas

Carbon dioxide gas contained in the beer-taste beverage according to one embodiment of the present invention may be added by mixing with carbonated water, or carbon dioxide gas may be added directly to a raw material liquid.

The amount of carbon dioxide gas contained in the beer-taste beverage is denoted as a carbon dioxide pressure of the beverage, and is not particularly limited as long as it does not hinder the effects of the present invention. Typically, the upper limit of the carbon dioxide pressure of the beverage is 0.700 w/w%, preferably 0.650 w/w%, more preferably 0.600 w/w%, and a lower limit thereof is 0.200 w/w%, preferably 0.300 w/w%, and more preferably 0.400 w/w%, and any combination of these upper and lower limits may be employed. For example, the carbon dioxide pressure of the beverage may be 0.200 w/w% or higher and 0.700 w/w% or lower, 0.300 w/w% or higher and 0.650 w/w% or lower, or 0.400 w/w% or higher and 0.600 w/w% or lower.

As used herein, the gas pressure refers to a gas pressure in the container, except in special cases.

The pressure can be measured by a method well known to those skilled in the art, for example, fixing a sample at 20°C in a gas pressure gauge, opening a valve of the gauge once to release the gas, closing the valve again, shaking the gauge, and reading the value when a pointer reaches a certain position, or by a method using a commercially available gas pressure measuring apparatus.

1.3 Other additives

The beer-taste beverage in one embodiment of the present invention may contain various additives as needed, provided that the effect of the present invention is not hindered.

Examples of such additives include a colorant, a foaming agent, a fermentation accelerator, a yeast extract, a protein-based substance such as a peptide-containing substance, and a seasoning agent such as amino acid.

The colorant is used to impart a beer-like color to the beverage, and a caramel pigment, etc., can be used. The foaming agent is used to form beer-like foam in a beverage or to retain foam of a beverage, and plant-extracted saponin-based substances such as soybean saponin and Quillaja saponin, plant proteins such as corn and soybean, and peptide-containing substances, protein-based substances such as bovine serum albumin, yeast extracts, etc. can be appropriately used.

The fermentation accelerator is used to accelerate fermentation due to yeast, and for example, yeast extracts, bran components such as rice and wheat-family grains, vitamins, and minerals can be used singly or in combination.

2. Method for producing beer-taste beverage

The method for producing a beer-taste beverage of the present invention is not particularly limited, and examples of the method include a method comprising the following steps (1) to (3).

- Step (1): A step of carrying out at least one of saccharification treatment, boiling treatment, and solid content removal treatment by using various raw materials to obtain a pre-beverage liquid.
- Step (2): A step of adding carbon dioxide gas to the pre-beverage liquid.
- Step (3): A step of adjusting the contents of maltol, f furaneol, and β-damascenone.

<Step (1)>

Step (1) is a step of carrying out at least one of saccharification treatment, boiling treatment, and solid content removal treatment by using various raw materials to obtain a pre-beverage liquid.
For example, when malt is used as one of various raw materials, various raw materials including water and malt are placed in a charging kettle or a charging tank, and an enzyme such as amylase is added when needed. As various raw materials other than the malt, a hop, dietary fibers, a sweetener, an antioxidant, a bitterness-imparting agent, a flavor, an acidulant, a colorant, etc. may be added.
The mixture of various raw materials is heated to saccharify starch of raw materials for saccharification treatment. The temperature and time of the saccharification treatment are appropriately adjusted according to the type of malt used, the malt ratio, raw materials other than water and malt, etc. After the saccharification treatment, filtration is carried out to obtain a saccharification solution.
It is noted that this saccharification solution is preferably subjected to boiling treatment.
When the hop, the bittering agent, etc. are used as raw materials, they are preferably added in this boiling treatment. The hop, the bittering agent, etc. may be added between the start of boiling and the end of boiling of the saccharification solution.
Subsequently, solid content removal treatment in a clarification tank is preferably carried out in order to remove a solid content such as coagulated protein. The pre-beverage liquid is obtained in such a manner.
Instead of the aforementioned saccharification solution, a pre-beverage liquid may be prepared by adding warm water to a malt extract and adding a hop, a bittering agent, etc., to carry out boiling treatment.
Moreover, when malt is not used as one of the various raw materials, a liquid sugar containing a carbon source, a nitrogen source as an amino acid-containing raw material other than a wheat-family grain or malt, a hop, dietary fibers, a sweetener, an antioxidant, a bitterness-imparting agent, a flavor, an acidulant, a colorant, etc. may be mixed with warm water to prepare a solution of liquid sugar, and the solution of liquid sugar may be subjected to boiling treatment to prepare a pre-beverage liquid.
When a hop is used, it may be added before the boiling treatment, or may be added between the start of boiling and the end of boiling of the solution of liquid sugar.
After step (1), a fermentation step using yeast may be carried out to remove alcohol generated in the fermentation step, and a step of preparing a fermented beverage having an ethanol concentration of less than 0.5 (v/v)%, more preferably less than 0.1 (v/v)%, still more preferably less than 0.01 (v/v)%, and even still more preferably less than 0.005 (v/v)%, may be carried out to produce a beer-taste beverage.
On the other hand, in the production method according to one embodiment of the present invention, the fermentation step and the step of removing alcohol may not be carried out.

<Step (2)>

Step (2) is a step of adding carbon dioxide gas to the pre-beverage liquid.
As the method for adding carbon dioxide gas, a known method applied when a carbonated beverage is produced can be employed. The carbon dioxide gas pressure is preferably adjusted to be within the above range by employing a known method.

<Step (3)>

Step (3) is a step of adjusting the contents of maltol, furaneol, and β-damascenone.
Steps (3) may be carried out before or after the saccharification treatment, before or after the boiling treatment, or before or after the solid content removal treatment of step (1), or may be carried out before or after step (2) after completion of step (1). However, from the viewpoint of accurately adjusting the content in the beverage finally produced, step (3) is preferably carried out after completion of step (1) and before the start of step (2).

In step (3), upon measurement of the contents of maltol, furaneol, and β-damascenone in the beverage before adjustment, the content of each component is preferably adjusted so as to be within each aforementioned range by adding these components respectively or diluting the beverage with water based on the measurement values. If the contents of the three components are already within desired ranges due to presence of natural maltol, natural furaneol, and natural β-damascenone, derived from the raw materials in the beverage before adjustment, it is not necessary to add maltol, furaneol, and β-damascenone, or add water to dilute the beverage in this step.

After these steps, steps which are carried out in production of beer-taste beverages and are well known to a person skilled in the art, such as a liquor storage step and a filtration step, may be carried out.

The beer-taste beverage according to one embodiment of the present invention thus obtained is filled in a predetermined container and distributed as a product on the market.

The method for packing the beverage in a container is not particularly limited, and a method for packing a beverage in a container that is well known to a person skilled in the art can be employed. By the step of packing the beverage in a container, the beer-taste beverage of the present invention is filled and sealed in a container. A container of any form and material may be used in the step of packing the beverage in a container, and examples of the container are as described above.

Examples

Hereinafter, the present invention will be described in more detail with reference to Examples, but the present invention is not limited to these Examples.

Examples 1 to 15 and Comparative Examples 1 to 6

By using water, malt, and hop, to the wort obtained by saccharification treatment were added a colorant (caramel pigment), antioxidant (ascorbic acid), and acidulant (lactic acid and phosphoric acid) so as to be in each content as shown in Tables 1 to 4, without carrying out fermentation step using yeast, and to the mixture was added carbon dioxide gas to prepare a beer-taste beverage having a pH of less than 4.0 and an ethanol concentration of less than 0.0050 (v/v)%.

Then, regarding "inappropriate and unpleasant sweetness," and "typical beer taste," seven panelists who were trained on a daily basis carried out sensory evaluations with scores in 1.0 increments in the range of 3.0 (maximum value) to 1.0 (minimum value) based on the following scoring criteria. For evaluation, samples that meet the following criteria "3.0," "2.0," and "1.0" were prepared in advance, and uniform criteria were adopted among the panelists. It is noted that in all of the sensory evaluations in Tables 1 to 4, no difference in the score values of 2.0 or more was confirmed between the panelists for the same beverage.

[Scoring criteria for inappropriate and unpleasant sweetness]

- "3.0": No inappropriate and unpleasant sweetness is felt.

- "2.0": Inappropriate and unpleasant sweetness is felt to some extent.

- "1.0": Inappropriate and unpleasant sweetness is felt quite strongly.

[Scoring criteria for typical beer taste]

- "3.0": Typical beer taste is felt quite strongly.

- "2.0": Typical beer taste is felt to some extent.

- "1.0: No typical beer taste is felt.

Moreover, from the average scores of the panelists for the three sensory evaluation items described above, comprehensive evaluation of each beer-taste beverage was conducted according to the following evaluation criteria.

The results are shown in Tables 1 to 4.

[Comprehensive evaluation]

- "A": The average values of scores by the panelists for the two sensory evaluation items: "inappropriate and unpleasant sweetness," and "typical beer taste," are each 2.5 or more.

- "C": Either one of the average values of scores by the panelists for the two sensory evaluation items: "inappropriate and unpleasant sweetness," and "typical beer taste," is lower than 1.0.

- "B": "B" corresponds to neither "A" nor "C" in terms of a set of values.

[Table 1]

| | Example 1 | Example 2 | Example 3 | Comparative Example 1 | Comparative Example 2 |
|---|---|---|---|---|---|
| Malt (mg/L) | 8860 | 8860 | 8860 | 8860 | 8860 |
| Hop (mg/L) | 71 | 71 | 71 | 71 | 71 |
| Caramel pigment (mg/L) | 500 | 500 | 500 | 500 | 500 |
| Ascorbic acid (mg/L) | 100 | 100 | 100 | 100 | 100 |
| Maltol (mg/L) | 1.5 | 0.1 | 6 | 0.01 | 10 |
| Furaneol (mg/L) | 0.63 | 0.63 | 0.63 | 0.63 | 0.63 |
| $\beta$-Damascenone (mg/L) | 0.15 | 0.15 | 0.15 | 0.15 | 0.15 |
| Lactic acid (mg/L) | 200 | 200 | 200 | 200 | 200 |
| Phosphoric acid (mg/L) | 136 | 136 | 136 | 136 | 136 |
| Total amount of extract (% by weight) | 0.31 | 0.31 | 0.31 | 0.31 | 0.31 |
| Ethanol content (v/v)% | less than 0.0050 | less than 0.0050 | less than 0.0050 | less than 0.0050 | less than 0.0050 |
| pH | 3.8 | 3.8 | 3.8 | 3.8 | 3.8 |
| Maltol/furaneol | 2.38 | 0.16 | 9.52 | 0.02 | 15.87 |
| Maltol/$\beta$-Damascenone | 10.00 | 0.67 | 40.00 | 0.07 | 66.67 |
| Furaneol/$\beta$-Damascenone | 4.20 | 4.20 | 4.20 | 4.20 | 4.20 |
| Carbon dioxide (w/w) % | 0.500 | 0.500 | 0.500 | 0.500 | 0.500 |
| Calorie (kcal/360 mL) | less than 5 | less than 5 | less than 5 | less than 5 | less than 5 |
| Fat content (g/350 mL) | less than 0.5 | less than 0.5 | less than 0.5 | less than 0.5 | less than 0.5 |
| Protein content (g/350 mL) | less than 0.5 | less than 0.5 | less than 0.5 | less than 0.5 | less than 0.5 |
| Bitterness units (BUs) | 19.5 | 19.5 | 19.5 | 19.5 | 19.5 |
| Chromaticity (EBC) | 8.5 | 8.5 | 8.5 | 8.5 | 8.5 |
| Inappropriate and unpleasant sweetness | 3.0 | 3.0 | 2.3 | 3.0 | 1.4 |
| Typical beer taste | 3.0 | 2.7 | 3.0 | 1.4 | 2.1 |

(continued)

|  | Example 1 | Example 2 | Example 3 | Comparative Example 1 | Comparative Example 2 |
|---|---|---|---|---|---|
| Comprehensive evaluation | A | A | B | C | C |

[Table 2]

|  | Example 1 | Example 4 | Example 5 | Comparative Example 3 | Comparative Example 4 |
|---|---|---|---|---|---|
| Malt (mg/L) | 8860 | 8860 | 8860 | 8860 | 8860 |
| Hop (mg/L) | 71 | 71 | 71 | 71 | 71 |
| Caramel pigment (mg/L) | 500 | 500 | 500 | 500 | 500 |
| Ascorbic acid (mg/L) | 100 | 100 | 100 | 100 | 100 |
| Maltol (mg/L) | 1.5 | 1.5 | 1.5 | 1.5 | 1.5 |
| Furaneol (mg/L) | 0.63 | 0.01 | 2 | 0.001 | 4 |
| β-Damascenone (mg/L) | 0.15 | 0.15 | 0.15 | 0.15 | 0.15 |
| Lactic acid (mg/L) | 200 | 200 | 200 | 200 | 200 |
| Phosphoric acid (mg/L) | 136 | 136 | 136 | 136 | 136 |
| Total amount of extract (% by weight) | 0.31 | 0.31 | 0.31 | 0.31 | 0.31 |
| Ethanol content (v/v)% | less than 0.0050 | less than 0.0050 | less than 0.0050 | less than 0.0050 | less than 0.0050 |
| pH | 3.8 | 3.8 | 3.8 | 3.8 | 3.8 |
| Maltol/furaneol | 2.38 | 150.00 | 0.75 | 1500.00 | 0.38 |
| Maltol/β-Damascenone | 10.00 | 10.00 | 10.00 | 10.00 | 10.00 |
| Furaneol/β-Damascenone | 4.20 | 0.07 | 13.33 | 0.01 | 26.67 |
| Carbon dioxide (w/w) % | 0.500 | 0.500 | 0.500 | 0.500 | 0.500 |
| Calorie (kcal/360 mL) | less than 5 | less than 5 | less than 5 | less than 5 | less than 5 |
| Fat content (g/350 mL) | less than 0.5 | less than 0.5 | less than 0.5 | less than 0.5 | less than 0.5 |
| Protein content (g/350 mL) | less than 0.5 | less than 0.5 | less than 0.5 | less than 0.5 | less than 0.5 |
| Bitterness units (BUs) | 19.5 | 19.5 | 19.5 | 19.5 | 19.5 |
| Chromaticity (EBC) | 8.5 | 8.5 | 8.5 | 8.5 | 8.5 |
| Inappropriate and unpleasant sweetness | 3.0 | 3.0 | 2.3 | 3.0 | 1.3 |
| Typical beer taste | 3.0 | 2.6 | 3.0 | 1.1 | 2 |
| Comprehensive evaluation | A | A | B | C | C |

[Table 3]

| | Example 1 | Example 6 | Example 7 | Comparative Example 5 | Comparative Example 6 |
|---|---|---|---|---|---|
| Malt (mg/L) | 8860 | 8860 | 8860 | 8860 | 8860 |
| Hop (mg/L) | 71 | 71 | 71 | 71 | 71 |
| Caramel pigment (mg/L) | 500 | 500 | 500 | 500 | 500 |
| Ascorbic acid (mg/L) | 100 | 100 | 100 | 100 | 100 |
| Maltol (mg/L) | 1.5 | 1.5 | 1.5 | 1.5 | 1.5 |
| Furaneol (mg/L) | 0.63 | 0.63 | 0.63 | 0.63 | 0.63 |
| $\beta$-Damascenone (mg/L) | 0.15 | 0.01 | 0.5 | 0.001 | 1 |
| Lactic acid (mg/L) | 200 | 200 | 200 | 200 | 200 |
| Phosphoric acid (mg/L) | 136 | 136 | 136 | 136 | 136 |
| Total amount of extract (% by weight) | 0.31 | 0.31 | 0.31 | 0.31 | 0.31 |
| Ethanol content (v/v)% | less than 0.0050 | less than 0.0050 | less than 0.0050 | less than 0.0050 | less than 0.0050 |
| pH | 3.8 | 3.8 | 3.8 | 3.8 | 3.8 |
| Maltol/furaneol | 2.38 | 2.38 | 2.38 | 2.38 | 2.38 |
| Maltol/$\beta$-Damascenone | 10.00 | 150.00 | 3.00 | 1500.00 | 1.50 |
| Furaneol/$\beta$-Damascenone | 4.20 | 63.00 | 1.26 | 630.00 | 0.63 |
| Carbon dioxide (w/w) % | 0.500 | 0.500 | 0.500 | 0.500 | 0.500 |
| Calorie (kcal/360 mL) | less than 5 | less than 5 | less than 5 | less than 5 | less than 5 |
| Fat content (g/350 mL) | less than 0.5 | less than 0.5 | less than 0.5 | less than 0.5 | less than 0.5 |
| Protein content (g/350 mL) | less than 0.5 | less than 0.5 | less than 0.5 | less than 0.5 | less than 0.5 |
| Bitterness units (BUs) | 19.5 | 19.5 | 19.5 | 19.5 | 19.5 |
| Chromaticity (EBC) | 8.5 | 8.5 | 8.5 | 8.5 | 8.5 |
| Inappropriate and unpleasant sweetness | 3.0 | 3.0 | 3.0 | 3.0 | 1.4 |
| Typical beer taste | 3.0 | 2.7 | 2.3 | 1.3 | 2.1 |
| Comprehensive evaluation | A | A | B | C | C |

[Table 4]

| | Example 1 | Example 8 | Example 9 | Example 10 | Example 11 | Example 12 | Example 13 | Example 14 | Example 15 |
|---|---|---|---|---|---|---|---|---|---|
| Malt (mg/L) | 8860 | 8860 | 8860 | 8860 | 8860 | 8860 | 8860 | 8860 | 8860 |
| Hop (mg/L) | 71 | 71 | 71 | 71 | 71 | 71 | 71 | 71 | 71 |
| Caramel pigment (mg/L) | 500 | 500 | 500 | 500 | 500 | 500 | 500 | 500 | 500 |
| Ascorbic acid (mg/L) | 100 | 100 | 100 | 100 | 100 | 100 | 100 | 100 | 100 |
| Maltol (mg/L) | 1.5 | 0.1 | 0.1 | 0.1 | 0.1 | 6 | 6 | 6 | 6 |
| Furaneol (mg/L) | 0.63 | 0.01 | 0.01 | 2 | 2 | 0.01 | 0.01 | 2 | 2 |
| β-Damascenone (mg/L) | 0.15 | 0.01 | 0.5 | 0.01 | 0.5 | 0.01 | 0.5 | 0.01 | 0.5 |
| Lactic acid (mg/L) | 200 | 200 | 200 | 200 | 200 | 200 | 200 | 200 | 200 |
| Phosphoric acid (mg/L) | 136 | 136 | 136 | 136 | 136 | 136 | 136 | 136 | 136 |
| Total amount of extract (% by weight) | 0.31 | 0.31 | 0.31 | 0.31 | 0.31 | 0.31 | 0.31 | 0.31 | 0.31 |
| Ethanol content (v/v) % | less than 0.005 0 | less than 0.005 0 | less than 0.005 0 | less than 0.005 0 | less than 0.005 0 | less than 0.005 0 | less than 0.005 0 | less than 0.005 0 | less than 0.005 0 |
| pH | 3.8 | 3.8 | 3.8 | 3.8 | 3.8 | 3.8 | 3.8 | 3.8 | 3.8 |
| Maltol/furanol | 2.38 | 10.00 | 10.00 | 0.05 | 0.05 | 600.0 0 | 600.0 0 | 3.00 | 3.00 |
| Maltol/β-Damascenone | 10.00 | 10.00 | 0.20 | 10.00 | 0.20 | 600.0 0 | 12.00 | 600.0 0 | 12.00 |
| Furaneol/β-Damascenone | 4.20 | 1.00 | 0.02 | 200.0 0 | 4.00 | 1.00 | 0.02 | 200.0 0 | 4.00 |
| Carbon dioxide (w/w) % | 0.500 | 0.500 | 0.500 | 0.500 | 0.500 | 0.500 | 0.500 | 0.500 | 0.500 |
| Calorie (kcal/360 mL) | less than 5 | less than 5 | less than 5 | less than 5 | less than 5 | less than 5 | less than 5 | less than 5 | less than 5 |
| Fat content (g/350 mL) | less than 0.5 | less than 0.5 | less than 0.5 | less than 0.5 | less than 0.5 | less than 0.5 | less than 0.5 | less than 0.5 | less than 0.5 |
| Protein content (g/350 mL) | less than 0.5 | less than 0.5 | less than 0.5 | less than 0.5 | less than 0.5 | less than 0.5 | less than 0.5 | less than 0.5 | less than 0.5 |
| Bitterness units (BUs) | 19.5 | 19.5 | 19.5 | 19.5 | 19.5 | 19.5 | 19.5 | 19.5 | 19.5 |
| Chromaticity (EBC) | 8.5 | 8.5 | 8.5 | 8.5 | 8.5 | 8.5 | 8.5 | 8.5 | 8.5 |
| Inappropriate and unpleasant sweetness | 3.0 | 3.0 | 3.0 | 2.5 | 2.3 | 2.1 | 2.1 | 2.1 | 2 |

(continued)

|  | Example 1 | Example 8 | Example 9 | Example 10 | Example 11 | Example 12 | Example 13 | Example 14 | Example 15 |
|---|---|---|---|---|---|---|---|---|---|
| Typical beer taste | 3.0 | 2 | 2.1 | 2.3 | 2.4 | 2.3 | 2.4 | 2.6 | 2.7 |
| Comprehensive evaluation | A | B | B | B | B | B | B | B | B |

As shown in Table 1, each beverage was produced by fixing the contents of furaneol and β-damascenone and adjusting the content of maltol to 0.01 to 10 mg/L. As a result, when maltol was within the specified range, the scores for the "inappropriate unpleasant sweetness" and the "typical beer taste" above the certain criteria, were obtained.

Moreover, as shown in Table 2, each beverage was produced by fixing the contents of maltol and β-damascenone were fixed and adjusting the content of furaneol to 0.001 to 4 mg/L. This resulted in that when furaneol was within the specified range, the scores for the "inappropriate unpleasant sweetness" and the "typical beer taste" above the certain criteria, were obtained.

Furthermore, as shown in Table 3, each beverage was produced by fixing the contents of maltol and furaneol and adjusting the content of β-damascenone to 0.001 to 1 mg/L. This resulted in that when β-damascenone was within the specified range, the scores for the "inappropriate unpleasant sweetness" and the "typical beer taste" above the certain criteria, were obtained.

Moreover, as shown in Table 4, for the content of maltol of 0.05 to 8.00 mg/L, the content of furaneol of 0.005 to 3.00 mg/L, and the content of β-damascenone of 0.005 to 0.80 mg/L, each content in the vicinity of the minimum and maximum values thereof yielded the scores for the "inappropriate unpleasant sweetness" and the "typical beer taste" above the certain criteria.

**Claims**

1.   A beer-taste beverage, comprising maltol at 0.05 to 8.00 mg/L, furaneol at 0.005 to 3.00 mg/L, and β-damascenone at 0.005 to 0.80 mg/L, wherein the beverage has a calorie of lower than 5 kcal per 360 mL and an ethanol content of less than 0.5 (v/v)%.

2.   The beer-taste beverage according to claim 1, comprising no artificial flavor.

3.   The beer-taste beverage according to claim 1 or 2, comprising no artificial sweetener.

4.   The beer-taste beverage according to claim 3, comprising no sweetener.

5.   The beer-taste beverage according to any one of claims 1 to 4, having a fat content of less than 0.5 g per 350 mL.

6.   The beer-taste beverage according to any one of claims 1 to 5, having a protein content of less than 0.5 g per 350 mL.

7.    The beer-taste beverage according to any one of claims 1 to 6, wherein a carbon dioxide gas pressure of the beer-taste beverage is 0.700 w/w% or less.

8.   The beer-taste beverage according to any one of claims 1 to 7, wherein the beer-taste beverage is a non-fermented beverage.

| | INTERNATIONAL SEARCH REPORT | International application No. |
|---|---|---|
| | | PCT/JP2020/004635 |

**A. CLASSIFICATION OF SUBJECT MATTER**
Int.Cl. A23L2/00(2006.01)i, A23L2/52(2006.01)n, C12G3/06(2006.01)n
FI: A23L2/00B, C12G3/06, A23L2/52
According to International Patent Classification (IPC) or to both national classification and IPC

**B. FIELDS SEARCHED**

Minimum documentation searched (classification system followed by classification symbols)
Int.Cl. C12G3/06, A23L2/00, A23L2/52

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus/JMEDPlus/JST7580(JDreamIII), CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2017-528144 A (ALTRIA CLIENT SERVICES LLC) 28.09.2017 (2017-09-28), claims, paragraphs [0053]-[0056], [0061]-[0064] | 1-7 |
| Y | JP 2015-27309 A (SOMEYA, Taichi) 12.02.2015 (2015-02-12), claims, paragraphs [0008], [0009], examples | 1-7 |
| Y | JP 2013-81417 A (ASAHI BREWERIES LTD.) 09.05.2013 (2013-05-09), claims, paragraphs [0010]-[0020], etc. | 1-7 |
| Y | WO 2009/078360 A1 (SUNTORY HOLDINGS LTD.) 25.06.2009 (2009-06-25), paragraphs [0024]-[0029] | 1-7 |
| A | DONGMO, S. N. et al., Key volatile aroma compounds of lactic acid fermented malt based beverages-impact of lactic acid bacteria strains, Food Chemistry, 2017, vol. 229, pp. 565-573, abstract, etc. | 1-7 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02.04.2020 | 14.04.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

<table>
<tr><td colspan="2">**INTERNATIONAL SEARCH REPORT**<br>Information on patent family members</td><td>International application No.<br>PCT/JP2020/004635</td></tr>
<tr><td>JP 2017-528144 A</td><td>28.09.2017</td><td>US 2016/0073673 A1<br>WO 2016/044377 A1<br>claims, paragraphs [0069], [0070],<br>[0073], [0074]<br>EP 3473697 A1<br>CN 107205447 A</td></tr>
<tr><td>JP 2015-27309 A</td><td>12.02.2015</td><td>(Family: none)</td></tr>
<tr><td>JP 2013-81417 A</td><td>09.05.2013</td><td>(Family: none)</td></tr>
<tr><td>WO 2009/078360 A1</td><td>25.06.2009</td><td>CN 101878292 A</td></tr>
</table>

Form PCT/ISA/210 (patent family annex) (January 2015)

**REFERENCES CITED IN THE DESCRIPTION**

**Patent documents cited in the description**

- JP 2014207914 A
- JP 48022478 A
- JP 62055069 A
- JP 59021594 A
- JP 5137555 A

**Non-patent literature cited in the description**

- **MACMURRAY ; MORRISON.** *Journal of the Science of Food and Agriculture,* 1970, vol. 21, 520